# EUROPÄISCHE PATENTSCHRIFT

(11) **EP 0 659 786 B1**
(45) Veröffentlichungstag und Bekanntmachung des Hinweises auf die Patenterteilung: **18.03.1998**
(21) Anmeldenummer: 94119906.9
(22) Anmeldetag: 16.12.1994
(51) Int. Cl.: C08F 292/00, C08F 265/06

(54) **Kunststoff-Sanitärobjekte mit verbesserten Eigenschaften**
Plastic sanitary objects with better properties
Objets sanitaires en plastique à propriétés améliorées

(30) Priorität: 24.12.1993 DE 4344577
(43) Veröffentlichungstag der Anmeldung: 28.06.1995
(73) Patentinhaber: Röhm GmbH, 64293 Darmstadt (DE)
(72) Erfinder: Krieg, Manfred, Dr., D-64289 Darmstadt (DE); Ittmann, Günther, D-64823 Gross-Umstadt (DE)

(56) Entgegenhaltungen:
- DE-A- 3 201 109
- US-A- 4 906 676

## Beschreibung

### Gegenstand der Erfindung

Die Erfindung betrifft Kunststoff-Sanitärobjekte auf PMMA-Basis mit verbesserten, insbesondere besseren thermischen Eigenschaften unter den Bedingungen des Thermo-Schock-Tests.

### Stand der Technik

Sanitärobjekte aus Kunststoff, insbesondere auf PMMA-Basis mit einem hohen Gehalt an (anorganischem) Füllmaterial haben eine nicht zu übersehende Marktstellung auf dem Sanitärgebiet erlangt. Als Füllstoffe (Filler) werden verschiedene Typen von anorganischen Partikeln eingesetzt mit den Schwerpunkten Siliciumdioxid einerseits und Aluminiumoxid/-oxidhydrat bzw. Magnesiumhydroxid andererseits.
Sowohl die Herstellungsverfahren als die Produktqualität stellte die Technik im Verlauf der Entwicklung vor vielfältige Probleme, wobei nicht selten gewisse Kompromisse eingegangen werden mußten, um die verschiedenen Anforderungen zu befriedigen. Eine verhältnismäßig große Rolle spielt bei Sanitärobjekten neben der Stabilität und Unempfindlichkeit im Gebrauch das Aussehen der Objekte auch und gerade nach jahrelangem Gebrauch. Üblicherweise verwendet die Technik Gießharze, insbesondere PMMA-MMA Praepolymerisate, in welchen die Füllmaterialien dispergiert werden. Die Aushärtung erfolgt in formgebenden Kammern bzw. Formwerkzeugen. Bereits seit Jahrzehnten ist es bekannt, die feinteiligen anorganischen Füllstoffe mit haftungsvermittelnden Organosiliciumverbindungen umzusetzen. [Vgl. DE-C 24 49 656, DE-A 33 31 371, DE-C 34 47 114, DE-B 13 01 530, US-A 4 771 095, WO 89/05 310; S. Sterman, J.G. Marsden, Soc. Plast. Ind. 18th. Ann. Meeting (1963)].
Die Silanisierung der Füllstoffpartikel übt im allgemeinen auch einen günstigen Einfluß auf das Dispergierverhalten, die Deflocculation usw. aus. In der Praxis der Silanisierung von Füllstoffen spielen vinylsubstituierte Silane wie das γ-Methacryloyloxy-propyltrimethoxysilan, das Acryloyloxy-2-hydroxy-propoxy-propyltrimethoxysilan, das 3-(3-Methacryloyloxy-2-hydroxypropoxy)propyltrimethoxysilan neben Vinyltrimethoxysilan oder aminsubstituierten Silanen wie γ-Aminopropyltriethoxysilan eine Rolle.

In der WO 89/03 310 wird im Zusammenhang mit der Silanisierung von Aluminiumtrihydrat die Bruchanfälligkeit von Sanitärobjekten, insbesondere von Küchenspülen diskutiert, die in der Praxis der Beanspruchung durch heißes und kaltes Wasser in raschem Wechsel ausgesetzt werden. Diese Art der Beanspruchung kann mittels eines Thermo-Schock-Tests (Heißwasser-Wechseltest) simuliert werden. Die Lehre der WP 89/05 310 sieht vor, daß die Spülen nach einem speziellen Verfahren hergestellt werden, bei dem die Härtung in einem Formwerkzeug unter Druck und gleichzeitiger Anpassung an den Schrumpfprozeß und bei Temperaturen oberhalb der Glastemperatur der Polymermatrix vorgenommen wird.

In dieser Druckschrift wird, ohne sich auf diese Hypothese festzulegen, die Vorstellung geäußert, die verbesserte thermische Stabilität sei zum Teil der Verwendung spezieller Kopplungsreagentien zuzuschreiben, die dafür sorgen, daß die Bindungskraft zwischen den Grenzflächen von PMMA und Aluminiumtrihydrat-Partikeln kleiner ist, als die zwischen den spaltbaren Ebenen in den Füllstoff-Partikeln bestehende Bindungskraft. Die Bruchwahrscheinlichkeit sei somit im Bereich um die Partikel herum größer als innerhalb derselben, weil dadurch auch in der Bilanz mehr Energie absorbiert werde.

### Aufgabe und Lösung

Die vorstehend zitierte WO 89/05 210 hatte - ausgehend von der dort geäußerten Vorstellung - "moderately strong couplers" ausgewählt, um Bindungsverhältnisse der angestrebten Art sicherzustellen. Die besten Resultate werden laut dieser Druckschrift bei Verwendung von polymerisierbaren Organosilanen zusammen mit dem Ester einer Metallsäure oder einem organischen Komplexsalz von Übergangsmetallen der Gruppen IV und V des Periodensystems erreicht, wobei Organosilane im Gemisch mit einem Zirkonsäureester die besten Resultate erbringen. Ausweislich der Beschreibung und der Beispiele sind das γ-Methacryloyloxypropyl-trimethoxysilane und/oder das Vinyltrimethoxysilan die Kopplungsreagentien der Wahl. Die vorliegende Erfindung hat sich die weitere Verbesserung von Sänitärobjekten auf Basis von Polymethylmethacrylat (PMMA) als Matrixmaterial speziell im Hinblick auf deren Verhalten im Thermo-Schocktest (TST) zur Aufgabe gesetzt.
Die folgende Erfindung bedient sich ferner bestimmter Erfahrungstatsachen, die allerdings nicht als allgemein bekannt vorausgesetzt werden dürfen:
Die Zahl der unbeschadet überstandenen Zyklen im Thermo-Schock-Test (TST) nimmt - innerhalb bestimmter Grenzen - mit wachsender Teilchengröße des Füllmaterials [Al(OH)₃] sehr stark zu. Silanisierung mit dem vom Stand der Technik bevorzugten Silanisierungsagens γ-Methacryloyloxypropyltrimethoxysilan unterstützt nicht etwa - wie zu erwarten gewesen wäre - die durch Teilchenvergrößerung gewonnene höhere Beständigkeit im Thermo-Schock-Test, sondern macht sie im Gegenteil wieder zunichte. Damit scheinen zunächst die im Stand der Technik getroffenen Annahmen und die daraus gezogenen Folgerungen durch die Fakten widerlegt zu sein.
Es wurde nun gefunden, daß Kunststoff-Objekte, insbesondere Sanitärobjekte auf Polymethylmethacrylat-Basis mit verbesserten Eigenschaften, insbesondere verbesserter thermischer Beständigkeit unter den Bedingungen des Thermo-Schock-Tests erhalten werden, wenn man ausgehend von der üblicherweise verwendeten flüssigen polymerisierbaren organischen Vorstufe (enthält Praepolymerisat PM) unter Zusatz von 40 - 80 Gew.-% eines partikelförmigen, anorganischen Füllstoffs FS (bezogen auf die Gesamtheit aller eingesetzten Materialien) eine Suspension (organische Phase) herstellt, diese in ein formgebendes Werkzeug überführt und in an sich bekannter Weise härtet, wobei der partikelförmige, anorganische Füllstoff ausgewählt ist aus der Gruppe bestehend aus Aluminiumoxid, Aluminiumhydroxid [Al(OH)₃], Aluminiumoxidhydrat, Magnesiumhydroxid und Siliciumdioxid, insbesondere in den einschlägig verwendeten Modifikationen wie Cristobalit, mit der Maßgabe, daß die durchschnittliche Teilchengröße von mindestens 20 % der eingesetzten Partikel FS im Bereich 20 bis 60 um, vorzugsweise im Bereich 45 ± 10 um liegt und daß die Partikel ausschließlich mittels eines nicht ethylenisch ungesättigten Silanisierungsreagenzes SR silanisiert worden sind.
Die Teilchengrößenbestimmung kann beispielsweise nach B. Scarlett, Filtration & Separation, pg. 215, 1965 vorgenommen werden. Vorzugsweise ist der Zusatz des anorganischen Füllmaterials so beschaffen, daß das ausgehärtete Gießharz einen elastischen Schermodul von wenigstens 5 GNm⁻², bevorzugt von wenigenstens 10 GNm⁻² aufweist, wobei bei der Einstellung der mechanischen Eigenschaften die vorgesehene Anwendung der Gießharze im Auge zu behalten ist.

### Die polymerisierbare, organische Vorstufe B)

Die Polymerisate gemäß der vorliegenden Erfindung sind in der Regel ganz oder überwiegend aus Methylmethacrylat aufgebaut (> 50 Gew.-%). Als flüssige Polymervorstufe sind Monomere M bzw. Monomer-mischungen geeignet, wie z.B. in EP-PS 218 866 beschrieben. Die Monomeren M, die vorzugsweise ein oder mehrere Praepolymerisate PM enthalten, werden vorzugsweise radikalisch unter Bildung eines bei Raumtemperatur festen Polymerisats polymerisiert. In dieser Hinsicht schließt sich die vorliegende Erfindung an die Lehre des Standes der Technik (z.B. DE-PS 24 49 656, EP-PS 0 214 551 oder EP-PS 0 218 866) an, wobei die flüssigen Polymervorstufen eine Viskosität von weniger als 5 Pa·s, vorzugsweise von weniger als 0,5 Pa·s bei der zur Formgebung vorgesehenen Temperatur aufweisen. Als Monomere M seien neben MMA vinylische Monomere oder Vinyliden-Monomere genannt (vgl. Ullmanns Enzyklopädie der Technischen Chemie, 3. Aufl., Bd. 14, Seiten 108 bis 110, Urban & Schwarzenberg, 1963), wie beispielsweise Vinylester und -ether, sowie Vinylverbindungen, vinylische Carbonylverbindungen, Vinylaromaten, heterocyclische Vinylverbindungen, makromonomere Verbindungen wie beispielsweise ungesättigte Polyester oder Polyurethane sowie insbesondere Derivate der Acryl- und der Methacrylsäure. Bevorzugt eingesetzt werden Monomere der Formel I: 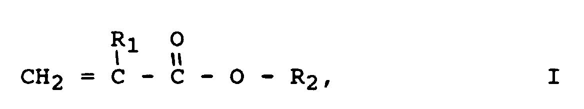 worin R₁ für Wasserstoff oder Methyl, R₂ für einen gegebenenfalls verzweigten und gegebenenfalls substituierten Alkylrest mit 1 bis 18 Kohlenstoffatomen, für einen gegebenenfalls substituierten Cycloalkylrest mit 5 bis 12 Kohlenstoffatomen oder für einen gegebenenfalls substituierten Arylrest mit 6 bis 10 Kohlenstoffatomen steht. Die an sich bekannten Substituenten sind beispielsweise Halogen, Hydroxy, Alkoxy, Dialkylaminosubstituenten mit C₁-C₁₂-Alkylresten, vorzugsweise mit C₁-C₆-Alkylresten. Insbesondere seien als Monomere M Verbindungen der Formel I genannt, worin R₂ für Alkylreste mit 1 bis 8 Kohlenstoffatomen steht, wie beispielsweise Ethyl(meth)acrylat, Propyl(meth)acrylat, Butyl(meth)acrylat bzw. Isomere, 2-Ethylhexyl(meth)acrylat, Cyclohexyl(meth)acrylat, Phenyl(meth)acrylat, Benzyl(meth)acrylat, sowie speziell Methylmethacrylat. Ferner können die Polymervorstufen noch an sich bekannte vernetzende Monomere enthalten, beispielsweise solche mit mindestens zwei polymerisationsfähigen Vinylgruppen im Molekül (vgl. H. Rauch-Puntigam, Th. Völker, "Acryl- und Methacrylverbindungen", Seite 184, Springer-Verlag, 1967), wobei exemplarisch Ethylenglykoldimethacrylat, 1,4-Butandioldimethacrylat, Triglykoldimethacrylat, Trimethylolpropantrimethacrylat, Allylverbindungen wie Allylmethacrylat oder Triallylcyanurat genannt seien. Der Gehalt an vernetzenden Monomeren liegt im allgemeinen bei 0,01 bis 10 Gew.-%, vorzugsweise bei 0,1 bis 5 Gew.-% bezogen auf die flüssigen Polymervorstufen. Vorzugsweise enthalten die Polymervorstufen einen Gehalt von über 50 Gew.-%, speziell von 80 bis 100 Gew.-% an Methylmethacrylat. Als Comonomere können weitere mit den Methacrylestern der Formel I copolymerisierbare Monomere verwendet werden, wie beispielsweise die schon genannten Vinylaromaten und heterocyclische Vinylverbindungen, so z. B. Styrol, ringsubstituierte Styrole, -Methylstyrol, Divinylbenzol, Vinylpyrrolidon oder Vinylpyridin, Acrylnitril und Methacrylnitril, Vinylester wie Vinylacetat und Vinylpropionat. Im allgemeinen überwiegt der mengenmäßige Anteil der (Meth)acrylsäureester der Formel I, insbesondere des MMA (> 50 Gew.-%) und der vernetzenden Monomeren, der zusammen vorteilhaft bis 100 Gew.-% der Polymervorstufe ausmachen kann. Besonders günstig ist ein Gemisch aus dem Monomeren Methylmethacrylat und einem vernetzenden Monomeren wie beispielsweise Glykoldimethacrylat, wobei das Gewichtsverhältnis vorteilhaft zwischen 95 : 5 und 99,9 : 0,1 liegt. Vorzugsweise enthält die flüssige, organische, polymerisierbare Vorstufe Praepolymerisate PM, die im allgemeinen aus denselben Monomeren M wie die polymerisierbare Vorstufe aufgebaut sind, wobei die Praepolymerisate PM jedoch keine funktionalisierten Monomeren enthalten. Im allgemeinen gelten die selben Proportionen wie für die Monomeren M angegeben. Die monomeren Bestandteile der Praepolymerisate PM können identisch sein mit den Monomeren M oder auch von diesen verschieden. Vorzugsweise sind die Praepolymerisate PM in dem Monomeren M gelöst, sie können aber auch darin dispergiert sein. In der Regel haben die Praepolymerisate PM mittlere Molekulargewichte Mw im Bereich zwischen 2 x 10⁴ und 4 x 10⁵ Dalton (Bestimmung durch Gelpermeationschromatographie, vgl. hierzu: H.F. Mark et al., Encyclopedia of Polymer Science and Technology, Vol. 10, Seiten 1 bis 19, J. Wiley, 1987). Der Anteil der Praepolymerisate PM an den flüssigen Polymervorstufen liegt im Bereich 0 bis 20 Gew.-%, vorzugsweise 3 bis 10 Gew.-%. Beispielsweise kann das Praepolymerisat PM ein Copolymerisat aus Methylmethacrylat und Methylacrylat im Gewichtsverhältnis 9 : 1 mit einem mittleren Molekulargewicht Mw von etwa 2,5 x 10⁵ Dalton sein.

Der partikelförmige anorganische Füllstoff FS ist definitionsgemäß ausgewählt aus der Gruppe bestehend aus Aluminiumoxid, Aluminiumhydroxid [Al(OH)₃], Aluminiumoxidhydrat, Magnesiumhydroxid und Siliciumdioxid.

Desweiteren gilt die Bestimmung, daß mindestens 20 % der Partikel im Bereich 20 - 60 um, vorzugsweise im Bereich 45 ± 10 um liegen. Partikel im gewünschten Teilchengrößenbereich können beispielsweise durch Mahlung von Chargen größerer Dimensionen (z.B. der Aluminiumoxidtypen ALCOA® C33 ggfs. im Gemisch mit anderen Typen) gewonnen werden.
Die Teilchengröße wird gemäß den üblichen Verfahren bestimmt, wobei zur Teilchengrößenbestimmung die jeweils größten Abmessungen der Partikel herangezogen werden (vgl. beispielsweise B. Scarlett, Filtration & Separation, Seite 215, 1965).

Das organische Silanisierungsmittel SR
ist u.a. dadurch charakterisiert, daß es **keine** ethylenisch ungesättigte Gruppe (Vinylgruppe) im Molekül enthält. Damit unterscheidet es sich grundlegend von den in der Praxis ganz überwiegend eingesetzten vinylischen Organosilanverbindungen wie dem γ-Methacryloyloxypropyl-trimethoxysilan oder dem Vinyltrimethoxysilan. Vorzugsweise entsprechen die Silanisierungsreagentien der Formel I: 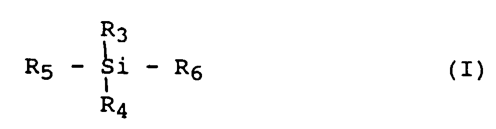 worin
- R₃: die Bedeutung Alkyl oder Cycloalkyl mit 1 bis 16 Kohlenstoffatomen oder eine Gruppe 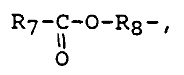 worin R₇ für einen Alkylrest mit 1 bis 6 Kohlenstoffatomen oder einen Arylrest mit bis zu 14 Kohlenstoffatomen, insbesondere Phenyl und R₈ für eine Gruppe -(CH₂)n- steht, wobei n eine ganze Zahl von 1 bis 6 bedeutet, und
- R₄: die Bedeutung -OR₉, worin R₉ für einen Alkylrest mit 1 bis 6 Kohlenstoffatomen und
- R₅: die gleiche Bedeutung wie R₃ oder R₄ und
- R₆: die gleiche Bedeutung wie R₃ oder R₄
besitzen.

Vorzugsweise steht R₃ für einen verzweigten C₄-C₁₆-Alkylrest. Genannt seien insbesondere die C₈-C₁₂-Alkylsilane mit verzweigten Alkylresten, ferner mit Esterresten gemäß Formel I, z.B. einem Acyloyloxyalkylrest.
Vorteilhafterweise werden die Silanisierungsreagentien SR zusammen mit Katalysatoren vom Amintyp, insbesondere vom Typ der Alkylamine mit 3 bis 6 Kohlenstoffatomen, speziell mit n-Butylamin verwendet. Der Aminkatalysator wird im allgemeinen in Mengen von 0,5 bis 10 Gew.-%, vorzugsweise 1 bis 5 Gew.-% bezogen auf die Organosiliciumverbindung eingesetzt. Im allgemeinen beträgt das Gewichtsverhältnis von anorganischem Füllstoff FS zum Silanisierungsreagenz SR zwischen 500 : 1 bis 20 : 1, vorzugsweise (50 ± 25) : 1.

### Die Herstellung der Gießharz-Suspensionen

Zweckmäßigerweise geht man bei der Herstellung der Gießharz-Supensionen von der üblichen flüssigen, polymerisierbaren, organischen Vorstufe aus, welche die Monomeren M, die Praepolymerisate PM enthält und welche die organische Phase bildet. In die organische Phase wird nun mit Hilfe mechanischer Dissolver der anorganische Füllstoff eingetragen. Der Vorgang ist in der Regel nach 10 Minuten abgeschlossen. Danach wird die Suspension über einen Zeitraum von etwa 10 Minuten am Dissolver dispergiert, wobei die Umlaufgeschwindigkeit des Dissolvers etwa 10 bis 20 Meter pro Sekunde beträgt. Im allgemeinen werden die anorganischen Füllstoffe FS der organischen Phase solchermaßen zugegeben, daß die Viskosität nicht über einen Wert von etwa 10 Pa s steigt. Vorzugsweise ist der Füllstoff FS vor Zugabe zur organischen Phase silanisiert worden, beispielsweise durch Trockensilanisierung, anstatt die Silanisierung in der flüssigen Phase im Zuge des Verfahrens vorzunehmen. Die Trockensilanisierung der Füllstoffe vom Typ FS ist Stand der Technik. Derartig silanisierte Füllstoffe sind auch kommerziell erhältlich.
Anschließend löst man die Polymerisationshilfsmittel, wie an sich bekannte Polymerisationsinitiatoren in Mengen von 0,1 bis 5 Gew.-% bezogen auf die Monomeren M. Als Polymerisationsinitiatoren werden Radikalbildner eingesetzt, deren Zerfall in Radikale thermisch oder durch Redox-Prozesse induziert werden kann. Grundsätzlich sind alle diejenigen geeignet, die bereits bei tiefen Temperaturen einen hohen Radikalstrom liefern (vgl. J. Brandrup, E.H. Immergut, "Polymer Handbook" 3rd. Ed., Kapitel III, Seiten 1 bis 65, J. Wiley 1989). Genannt seien z.B. Azoinitiatoren wie z.B. Azodiisobutyronitril oder Peroxyverbindungen wie Perester in den üblichen Mengen, wie z.B. 0,1 - 2 Gew.-% bezogen auf die Monomeren. Zweckmäßigerweise erfolgt der Zusatz der Initiatoren erst kurz vor dem Verfüllen und Aushärten der Gießharz-Suspensionen.

Den erfindungsgemäßen Gießharz-Suspensionen können zusätzlich zu den partikelförmigen anorganischen Füllstoffen FS noch Verstärkerstoffe, wie beispielsweise Faserstoffe, zugesetzt werden. Zu den geeigneten Faserstoffen gehören beispielsweise Glasfasern, Mineralfasern oder Steinfasern. Der Anteil dieser Verstärkerstoffe liegt im allgemeinen unterhalb des Gehaltes an den partikelförmigen, anorganischen Füllstoffen FS.
Um farbige Formteile herstellen zu können, kann man der organischen Phase auch Pigmente und/oder Farbstoffe, gewöhnlich 0,1 bis 2 Gew.-%, zusetzen. Als Beispiele seien Eisenoxid, Titandioxid, Zinkweiß, Ultramarinblau und Ruß genannt. Pigmente können auch als vorgebildete Dispersionen in die organische Phase mit Hilfe geeigneter Pigment-Dispergiermittel eingebracht werden. Farbmittel, Pigmente, Hilfsstoffe wie Stabilisatoren, Lichtschutzmittel, Trennmittel u.dgl. können in den üblichen Mengen in Anlehnung an den Stand der Technik eingesetzt werden [vgl. Ullmann's Encyclopedia of Industrial Chemistry, 5th Ed. Vol. A20, pg. 459 - 507, VCH (1992)].
Gegebenenfalls ist es von Vorteil, wenn die Gießharz-Suspension innere und/oder äußere Trennmittel enthält, die das Anhaften des gehärteten Gießharzes an der Form verhindern und eine gute Oberflächenbeschaffenheit der Gießharz-Formteile bewirken. Beispiele für innere Trennmittel sind Fettsäuren, Alkali- und Erdalkalisalze von Fettsäuren und Alkylphosphate sowie deren neutralisierte Derivate. Zu geeigneten äußeren Formtrennmitteln gehören auf den Formen befindliche Überzüge, beispielsweise aus Polytetrafluor-ethylen, Polyorganosiloxan oder Polyvinylalkohol.

### Herstellung der Gießharz-Formkörper

Die mit dem Polymerisationsinitiator versetzte, erfindungsgemäße Gießharz-Suspension läßt sich beispielsweise sehr gut in die üblichen Gießformen vergießen. Vorteilhafterweise wird die Suspension vor dem Verfüllen evakuiert. Die Härtung (= Polymerisation) der organischen Phase erfolgt vorzugsweise thermisch, beispielsweise durch Erhitzen auf 50 bis 80 Grad C während 20 bis 60 min, wobei die Härtung unter Anwendung von Druck wie auch ohne Druck verlaufen kann.
Mit Hilfe der erfindungsgemäßen Gießharz-Suspensionen lassen sich die vielfältigsten Formen füllen und eine technisch einwandfreie Polymerisation durchführen . Auf diese Weise können Platten, Schüsseln, Waschbecken, Spülbecken, WC-Becken, Formkörper für Bauindustrie, Maschinenfundamente, Behälter u.a. hergestellt werden. Eine weitere vorteilhafte Ausgestaltung der Erfindung ist die kontinuierliche Plattenherstellung auf einem Förderband. Dabei wird die mit einem geeigneten Polymerisationsinitiator versetzte Gießharz-Supension auf ein laufendes Förderband mit seitlichen Begrenzungen aufgebracht, wobei sie sich aufgrund ihrer niedrigen Viskosität und ihrer geringen Strukturviskosität schnell verteilt und nivelliert. Danach wird die Oberfläche der Suspension mit einem zweiten Metallband abgedeckt. Die Härtung der Suspension kann thermisch entweder durch Heizen der beiden Metallbänder erfolgen oder bei Verwendung geeigneter Redox-Initiatoren auch ohne Fremdheizung durchgeführt werden.
Die Restmonomerengehalte der gehärteten Gießharze liegen unterhalb 1 Gew.-% bezogen auf den Gesamtmonomerenanteil, bevorzugt unter 0,5 Gew.-%.

### Vorteilhafte Wirkungen der Erfindung

Die erfindungsgemäßen Gießharz-Suspensionen lassen sich sehr gut in die üblichen Gießformen vergießen. Die daraus hergestellten Objekte, insbesondere die oben genannten Kunstharz-Sanitärobjekte zeichnen sich durch gute mechanische und insbesondere excellente thermische Stabilität, ausgewiesen im Thermo-Schock-Test (TST), aus. Bei Küchenspülen liegt z.B. die Zahl der Zyclen im TST bei über 10 000.

Die Erfindung wird durch die folgenden Beispiele erläutert. Der Thermo-Schock-Test wurde folgendermaßen durchgeführt:

In die Spülmulde einer zu prüfenden Küchenspüle läuft aus einem Rohrauslaß mit einem Innendurchmesser von 10 mm und im Abstand von 80 mm zur Spülenmuldenoberfläche innerhalb 90 s eine Wassermenge von 6 l/min mit einer Temperatur von 90 Grad C. Die Ausflußöffnung in der Spülenmulde ist dabei geöffnet. Nach 30 s Pause fließt aus dem Rohrauslaß innerhalb von 90 s eine Wassermenge von 6 l/min mit einer Temperatur von 15 Grad C ± 2 Grad C. Die Ausflußöffnung in der Spülenmulde ist dabei ebenfalls geöffnet. Der Abstand vom Auftreffpunkt des Wasserstrahles bis zum Rand der Auslauföffnung beträgt 65 mm. Einmalige Heiß-/Kaltwasserbehandlung entspricht einem Zyklus.
Der zweite Zyklus beginnt 30 s nach Beendigung des ersten.
Tritt im Spülenboden im Bereich der Ausflußöffnung ein Durchriß der Spüle auf, wird der Test abgebrochen und die Zyklenzahl festgehalten.

### BEISPIELE

### A. Herstellung einer hochgefüllten Suspension

### Beispiel A-1

In 8712,125 g Methylmethacrylat (MMA) und 0,375 g 2,4-Dimethyl-6-tert.butylphenol werden 1125 g eines MMA-Polymerisats (η_{spez/c} = 130 - 140, M_{w} ca. 400.000, Produkt PLEXIGUM® M 920 der Fa. Röhm GmbH) bei ca. 50 Grad C innerhalb 5 Stunden gelöst und danach auf Raumtemperatur abgekühlt. In dem so erhaltenen Sirup werden 125 g Stearinsäure und 37,5 g Glykoldimethacrylat gelöst. Am Dissolver (Typ HD 7,5 der Fa. VMA Getzmann/BRD) werden unter mäßigem Rühren 14750 g Aluminiumhydroxid mit einer mittleren Teilchengröße von 40 µm, das zuvor mit Octyltriethoxysilan (Dynasilan® OCTEO) silanisiert wurde, in den Sirup eingetragen. Anschließend wird die Suspension mit dem Dissolver mit 12,5 m/s ca. 10 Minuten dispergiert.
Nach dem Abkühlen der Suspension auf Raumtemperatur werden darin 117,5 g (Bis-(4-t-butylcyclohexyl)-peroxydicarbonat und 23,5 g 2,2'-Azobis-(isobutyronitril) innerhalb von 30 min am Flügelrührer gelöst.

### Vergleichsbeispiel

Herstellung der hochgefüllten Suspension analog Beispiel 1 mit dem Unterschied, daß Aliuminiumhydroxid verwendet wurde, das zuvor mit Dynasilan ® MEMO = γ-Methacryloyloxypropyltrimethoxysilan silanisiert wurde.

### B. Herstellung einer Küchenspüle

Eine Gießform bestehend aus 2 getrennten Formteilhälften wird mit einer umlaufenden flexiblen Dichtung zusammengedrückt. Beide Formteilhälften sind über je einen Wasserkreislauf heiz- und kühlbar. Der Zwischenraum beider Formteilhälften hat die Form einer Küchenspüle. Die Dicke der flexiblen Dichtung wird so eingestellt, daß der im Zwischenraum gegossene Formkörper eine Wandstärke von 10 mm hat. Der Zwischenraum wird nun mit der hochgefüllten Suspension vollständig gefüllt und verschlossen.
Während der Härtung der Suspension befindet sich die Formteilhäfte, die die Rückseite der Küchenspüle erzeugt, waagrecht liegend oben. Nach der Härtung des Spülengießlings werden die beiden Formteilhälften getrennt und der Spülengießling aus der Form entnommen.

### Ergebnis der gegossenen Spülen im Thermoschocktest:

### Beispiel 1:

Test nach 11.100 Zyklen abgebrochen. Im Bereich der Ausflußöffnung kein Durchriß erkennbar.

### Vergleichsbeispiel:

Am Spülenboden nach 640 Zyklen im Bereich der Ausflußöffnung ein Durchriß erkennbar.

## Patentansprüche

1. Verfahren zur Herstellung von Kunststoff-Sanitärobjekten auf Polymethylmethacrylat-Basis mit verbesserten thermischen Eigenschaften nach dem Gießharz-Verfahren, wobei man ausgehend von üblichen flüssigen, polymerisierbaren organischen Vorstufen (Praepolymerisat PM) unter Zusatz von 40 - 80 Gew.-% eines partikelförmigen anorganischen Füllstoffs FS (bezogen auf die Gesamtheit aller eingesetzten Materialien) eine Suspension herstellt, diese in ein formgebendes Werkzeug überführt und in an sich bekannter Weise härtet und anschließend entformt,
dadurch gekennzeichnet,
daß der partikelförmige, anorganische Füllstoff FS ausgewählt ist aus der Gruppe bestehend aus Aluminiumoxid, Aluminiumhydroxid, Aluminiumoxidhydrat, Magnesiumhydroxid und Siliciumdioxid mit der Maßgabe, daß die durchschnittliche Teilchengröße von mindestens 20 % der eingesetzten Partikel FS im Bereich 20 - 60 µm liegt und daß die Partikel mittels eines nicht ethylenisch ungesättigten Silanisierungsreagenzes silanisiert worden sind.

## Claims

1. A process for preparing plastic sanitary articles based on polymethyl methacrylate, with improved thermal characteristics, using the cast resin method, wherein, starting from conventional, liquid, polymerisable, organic precursors (prepolymer PM), while adding 40 to 80 wt.% of a particle-like inorganic filler FS (based on the total amount of all the materials used), a suspension is prepared, supplied to a moulding tool, hardened in a manner known per se and then removed from the mould, characterised in that the particle-like inorganic filler FS is selected from the group comprising aluminium oxide, aluminium hydroxide, aluminium hydroxide hydrate, magnesium hydroxide and silicon dioxide, with the proviso that the average particle size of at least 20% of the particles FS used is within the range of from 20 to 60 µm, and that the particles have been silanised by means of a non-ethylenically unsaturated silanisation reagent.

## Revendications

1. Procédé de fabrication d'objets ou d'appareils sanitaires en matière plastique à base de polyméthylméthacrylate ayant des caractéristiques thermiques améliorées, fabriqués selon le procédé de coulée de résine, selon lequel, partant d'une pré-étape organique polymérisable usuellement liquide (prépolymésirable PM) et avec addition de 40 - 80 % en poids d'une charge organique en forme de particules (par rapport au total des produits utilisés), on réalise une suspension, on fait passer celle-ci dans un moule et on durcit de manière connue, puis on démoule,
caractérisé en ce qu'
on choisit la charge inorganique en forme de particules dans le groupe composé d'oxyde d'aluminium, hydroxyde d'aluminium, oxydrate d'aluminium, hydroxyde de magnésium, dioxyde de silicium avec une dimension moyenne des particules correspondant à 20 % au moins des particules utilisées de charge et se situant dans la plage comprise entre 20 µm et 60 µm et les particules sont silanisées à l'aide d'un réactif de silanisation non éthylénique insaturé.
